(19) Europäisches Patentamt / European Patent Office / Office européen des brevets

(11) **EP 2 334 193 B1**

(12) **EUROPEAN PATENT SPECIFICATION**

(45) Date of publication and mention
of the grant of the patent:
**15.08.2012 Bulletin 2012/33**

(51) Int Cl.:
*A23F 3/00* (2006.01)    *A23F 3/08* (2006.01)
*A23F 3/16* (2006.01)    *A23F 3/18* (2006.01)

(21) Application number: **09783590.4**

(22) Date of filing: **30.09.2009**

(86) International application number:
**PCT/EP2009/062671**

(87) International publication number:
**WO 2010/037769 (08.04.2010 Gazette 2010/14)**

(54) **PROCESS FOR MANUFACTURING TEA PRODUCTS**

VERFAHREN ZUR HERSTELLUNG VON TEEPRODUKTEN

PROCÉDÉ DE FABRICATION DE PRODUITS DE THÉ

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **02.10.2008 EP 08165776
23.12.2008 EP 08172696**

(43) Date of publication of application:
**22.06.2011 Bulletin 2011/25**

(73) Proprietors:
• **Unilever PLC
London
Greater London EC4P 4BQ (GB)**
Designated Contracting States:
**CY GB IE MT**
• **Unilever N.V.
3013 AL Rotterdam (NL)**
Designated Contracting States:
**AT BE BG CH CZ DE DK EE ES FI FR GR HR HU
IS IT LI LT LU LV MC MK NL NO PL PT RO SE SI
SK SM TR**

(72) Inventors:
• **COLLIVER, Steven, Peter
Jebel Ali FZE (AE)**
• **DOWNIE, Andrew, Lee
Sharnbrook Bedfordshire MK44 1LQ (GB)**
• **SHARP, David, George
Sharnbrook Bedfordshire MK44 1LQ (GB)**
• **YOU, Xiaoqing
Sharnbrook Bedfordshire MK44 1LQ (GB)**

(74) Representative: **Keenan, Robert Daniel
Unilever PLC
Unilever Patent Group
Colworth House
Sharnbrook
Bedford
Bedfordshire MK44 1LQ (GB)**

(56) References cited:
**EP-A1- 1 013 261        WO-A1-98/23164
WO-A2-2008/065007    US-A1- 2007 071 870**

**Description**

**TECHNICAL FIELD OF THE INVENTION**

The present invention relates to a process for manufacturing a tea product. More particularly the present invention relates to tea products obtained by combining fermented tea juice with unfermented tea material.

**BACKGROUND TO THE INVENTION**

Beverages based on the tea plant (*Camellia sinensis*) have been popular throughout the world for many hundreds of years. Traditionally such beverages are produced by infusing leaf tea in hot water.

Most of the tea consumed in the Western World is so-called black tea which is obtained by harvesting leaves of the plant *Camellia sinensis* and withering, rolling, enzymatically oxidizing (fermenting), firing and sorting them. However the leaves can be processed without the fermentation step to produce what is known as green tea. Such tea is widely consumed in parts of the People's Republic of China, Japan, North Africa and the Middle East. In another variation oolong tea is prepared by partial fermentation.

Tea leaves contain a large number of enzymes, biochemical intermediates and structural elements normally associated with plant growth and photosynthesis together with substances that are responsible for the characteristics of tea itself. These include flavanols, flavanol glycosides, polyphenolic acids, caffeine, amino acids, mono- and polysaccharides, proteins, cellulose, lipids, chlorophylls and volatiles.

Flavanols or more specifically flavan-3-ols tend to constitute up to 30% of the dry weight of freshly picked tea leaves and are known as catechins. Green tea retains most of the catechins, but their content in black tea is greatly reduced due to both chemical and enzymatic oxidations taking place during fermentation to give theaflavins and thearubigins.

Catechins have been claimed to possess a variety of biological activities including anti-tumour activity and effects on modulating bodyshape and/or body fat.

As well as affecting tea colour, theaflavins have been recognised as providing the "brightness" and "briskness" quality attributes of black tea. In fact, theaflavin content is known to correlate with the quality of black tea. Moreover, theaflavins have been shown to have several positive health benefits. The purported benefits include lowering blood lipid levels (e.g. cholesterol), anti-inflammation effects and anti-tumour effects.

Tea contains many other phenols. These include gallic acid, flavanols such as quercetin, kaemferol, myricetin, and their glycosides; and depsides such as chlorogenic acid and paracoumarylquinic acid. Some of these are believed to participate in the chemical reactions that occur during fermentation.

Green tea contains many more catechins than black tea. However despite the burgeoning health consciousness amongst many consumers green tea is usually dismissed in Western countries as being too pale and unpleasant to taste. Furthermore it is typically slow to infuse and therefore not suitable for the Western desire for convenience for the sake of quality. Further still, some of the health benefits afforded by the theaflavins of black tea may not be provided by the catechins of green tea. In order to overcome some of these drawbacks, efforts have been made to provide tea products having the advantageous properties of both black and green tea.

WO 2008 / 065007 discloses a process for producing a product enriched in theaflavins. The process comprises contacting a first and a second material to form a reaction mixture with a specific weight ratio of catechins to theaflavins, fermenting the reaction mixture, and then recovering the product from the reaction mixture. The process is particularly suitable for producing leaf tea products with high levels of theaflavins.

WO 98/23164 (Unilever) discloses a leaf tea comprising a blend of a first substantially fermented tea and a second substantially unfermented tea, characterised in that the blend contains catechins and phenols in a ratio of between 0.15 to 0.4. This document also teaches that the ratio of gallated to non-gallated catechins is related to bitterness and thus tea clones having a low ratio of gallated to non-gallated catechins are preferred.

We have now found that fermented tea juice expressed from fresh tea leaves has a lower ratio of gallated to non-gallated theaflavins than that of the fresh leaves themselves. Black tea juice is also found to be relatively low in caffeine. Thus fermented tea juice can be added to green tea products to increase the theaflavin content thereof whilst not imparting excessive bitterness from gallated theaflavins and/or whithout bringing large amounts of caffeine.

**TESTS AND DEFINITIONS**

Tea

"Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.*

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Green tea" refers to substantially unfermented tea. "Black tea" refers to substantially fermented tea. "Oolong tea" refers to partially fermented tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea leaves" refers to tea leaves and/or stem that have never been dried to a water content of less than 30% by weight, and usually have a water content in the range 60 to 90%.

"Dhool" refers to macerated fresh tea leaves.

## Expressing Juice

As used herein the term "expressing juice" refers to squeezing out juice from fresh tea leaves using physical force, as opposed to extraction of tea solids with the use of a solvent. Thus the term "expressing" encompasses such means as squeezing, pressing, wringing, spinning and extruding. It is possible that a small amount of solvent (e.g. water) is added to the leaves during the expression step. However, in order to prevent significant extraction of tea solids by the solvent, the moisture content of the leaves during expression is that of fresh tea leaves as defined hereinabove. In other words, during the expression step, the moisture content of the fresh tea leaves is between 30 and 90% by weight, more preferably between 60 and 90%. It is also preferred that the fresh leaves are not contacted with nonaqueous solvent (e.g. alcohols) prior to or during expression, owing to the environmental & economic problems associated with such solvents.

## Beverage

As used herein the term "beverage" refers to a substantially aqueous drinkable composition suitable for human consumption.

## Catechins

As used herein the term "catechins" is used as a generic term for catechin, gallocatechin, catechin gallate, gallocatechin gallate, epicatechin, epigallocatechin, epicatechin gallate, epigallocatechin gallate, and mixtures thereof. The catechins are sometimes referred to using the following shorthand notation: C for catechin, GC for gallocatechin, CG for catechin gallate, GCG for gallocatechin gallate, EC for epicatechin, EGC for epigallocatechin, ECG for epicatechin gallate, and EGCG for epigallocatechin gallate. The term "gallated catechins" is used as a generic term for CG, ECG, GCG, EGCG and mixtures thereof.

## Theaflavins

As used herein the term "theaflavins" is used as a generic term for theaflavin, theaflavin-3-gallate, theaflavin-3'-gallate, theaflavin-3,3'-digallate and mixtures thereof. The structures of these compounds are well-known (see, for example, structures xixiv in Chapter 17 of "Tea - Cultivation to consumption", K.C. Willson and M.N. Clifford (Eds), 1992, Chapman & Hall, London, pp.555-601). The theaflavins are sometimes referred to using the shorthand notation TF1-TF4 wherein TF1 is theaflavin, TF2 is theaflavin-3-gallate, TF3 is theaflavin-3'-gallate and TF4 is theaflavin-3,3'-digallate (or simply "theaflavin digallate"). The term "gallated theaflavins" is used as a generic term for TF2, TF3, TF4 and mixtures thereof.

Determination of Catechins and Caffeine in Leaf Tea

The amounts of catechins and caffeine in leaf tea are determined simultaneously by reverse-phase HPLC as follows.

*Sample Preparation*

1. Grind the leaf tea using a Cyclotech™ 1093 sample mill (FOSS Ltd, Warrington, Cheshire, UK) fitted with a 0.5 μm screen, until a fine powder is achieved.
2. Weigh accurately approximately 200 mg of the ground tea into an extraction tube, and record the mass.
3. Warm at least 20 ml of a methanol-water solution (70% v/v methanol in distilled water) to 70°C.
4. Add 5 ml of the hot methanol-water solution to the extraction tube. Gently mix the methanol-water and tea material on a vortex mixer; place in a water bath at 70°C for 5 minutes; mix again and then place in a water bath at 70°C for a further 5 minutes.
5. Gently mix the methanol-water and tea material on a vortex mixer again and then allow too cool for a 10 minutes at an air temperature of 20°C.
6. Centrifuge the extraction tube at a relative centrifugal force (RCF) of 2900 *g* for 10 minutes.
7. The extraction tube should now contain a liquid supernatant on top of a plug of tea material. Carefully decant supernatant into a clean graduated test tube.
8. Add 5 ml of the hot methanol-water solution to the plug in the extraction tube. Gently mix the methanol-water and tea material on a vortex mixer; place in a water bath at 70°C for 5 minutes; mix again and then place in a water bath at 70°C for a further 5 minutes.
9. Gently mix the methanol-water and tea material on a vortex mixer again and then allow too cool for a 10 minutes at an air temperature of 20°C.
10. Centrifuge the extraction tube at a RCF of 2900 g for 10 minutes.
11. The extraction tube should now contain a liquid supernatant on top of a plug of tea material. Carefully decant supernatant into the graduated test tube containing the supernatant from step 7.
12. Make up the pooled supernatants to 10 ml with the methanol-water solution.
13. Add 1 ml of a solution of 2.5 mg/ml EDTA and 2.5 mg/ml ascorbic acid in distilled water to the graduated test tube.
14. Dilute 1 part of the pooled supernatant mixture with 4 parts (by volume) of 10% acetonitrile stabiliser solution (10% v/v acetonitrile, 0.25 mg/ml ascorbic acid and 0.25 mg/ml EDTA in distilled water).
15. Decant the diluted pooled supernatant mixture into microcentrifuge tubes and centrifuge in a bench top centrifuge at a RCF of 14000 *g* for 10 minutes.

*HPLC Analysis conditions*

| Column: | Luna Phenyl hexyl 5μ, 250 x 4.60 mm |
| --- | --- |
| **Flow rate:** | 1 ml/min |
| **Oven temperature:** | 30°C |
| **Solvents:** | A: 2% acetic acid in acetonitrile |
| | B: 2% acetic acid and 0.02 mg/ml EDTA in water |
| **Injection volume:** | 10 μl |

**Gradient:**

| Time | % Solvent A | % Solvent B | Step |
| --- | --- | --- | --- |
| 0 to 10 min | 5 | 95 | Isocratic |
| 10 to 40 min | 5 - 18 | 95 - 85 | Linear gradient |
| 40 to 50 min | 18 | 82 | Isocratic |
| 50 to 55 min | 50 | 50 | Wash |

(continued)

| Time | % Solvent A | % Solvent B | Step |
|------|-------------|-------------|------|
| 55 to 75 min | 5 | 95 | Isocratic |

**Quantification:** Peak area relative to a calibration curve constructed daily. Calibration curve is constructed from caffeine and the concentration of catechins is calculated using the relative response factors of the individual catechins to caffeine (from the ISO catechin method - ISO/CD 14502-2). Individual caffeine standards (Sigma, Poole, Dorset, UK) are used as peak identification markers.

Determination of Catechins and Caffeine in Juice and Beverages

The amounts of catechins and caffeine in a liquid sample are determined simultaneously by reverse-phase HPLC as follows:

*Sample Preparation*

1. 9 ml of the sample are taken and 1.12 ml of acetonitrile added, along with 1.12 ml of a solution of 2.5 mg/ml EDTA and 2.5 mg/ml ascorbic acid in distilled water.
2. The resulting solution is then decanted into microcentrifuge tubes and centrifuged at a RCF of 14000 g for 10 minutes.

*HPLC Analysis conditions*

The HPLC analysis conditions are identical to those given above for the leaf tea.

Determination of Theanine in Juice and Beverages

The amount of theanine in a liquid sample is determined by reversed phase HPLC chromatography using fluorimetric detection following post-column derivatisation with o-pthalaldehyde.

*Sample Preparation*

The sample is diluted with de-ionised water (25°C) in a weight ratio of sample:water of 1:10.

*HPLC Analysis conditions*

| | |
|---|---|
| **Column:** | Hypersil HyPURITY Elite™ C18, 5μ, 150mm x 4.6cm |
| **Flow rate:** | 1 ml/min |
| **Oven temperature:** | 35°C |
| **Solvents:** | A: 5 mM pentadecafluorooctanoic acid in water |
| | B: 5 mM pentadecafluorooctanoic acid in acetonitrile |

**Gradient:**

| Time (min) | % Solvent A | % Solvent B |
|------------|-------------|-------------|
| 0 | 85 | 15 |
| 8 | 85 | 15 |
| 10 | 80 | 20 |
| 11 | 10 | 90 |

(continued)

| Time (min) | % Solvent A | % Solvent B |
|---|---|---|
| 14 | 10 | 90 |
| 15 | 85 | 15 |
| 31 | 85 | 15 |

**Quantification:** The eluant from the column is fed into a low dead-volume 3-way junction and mixed with the o-Pthalaldehyde reagent in a 1:1 ratio, the o-Pthalaldehyde reagent being pumped at 1 ml/minute by the isocratic pump. (The o-Pthalaldehyde reagent is 1.0 g/l o-Pthalaldehyde, 5 ml/l methanol, 2 ml/l Brij 35 and 3 ml/l 2-mercaptoethanol in pH 10 borate buffer.) Fluorescence detection is: Excitation = 340 nm and Emission = 425 nm. Peak area relative to a calibration curve constructed daily is used for quantification. The calibration curve is constructed from dilutions of a standard solution of Suntheanine™ (Taiyo KK).

## Determination of Theanine in Leaf Tea

The amount of theanine in a solid sample is determined by reversed phase HPLC chromatography using fluorimetric detection following post-column derivatisation with o-pthalaldehyde.

*Sample Preparation*

About 1.0 g of the sample is accurately weighed into a 100 ml volumetric flask. 50 ml of hot (60°C) deionised water is then added to the volumetric flask and the flask is vigorously shaken on an auto shaker for 30 minutes. After cooling to room temperature, the sample is made up to 100 ml with deionised water.

*HPLC Analysis conditions*

The HPLC analysis conditions are identical to those given above for juice and beverages.

## Determination of Theaflavins in Juice and Beverages

Reversed-phase high performance liquid chromatography is used to quantify the amount of theaflavins in a liquid sample as follows:

*Sample Preparation*

1. 2 parts by weight of acetonitrile and 1 part by weight of a stabilising solution of 25 mg/ml EDTA and 25 mg/ml ascorbic acid in distilled water is added to 8 parts by weight of sample.
2. The diluted sample is then decanted into microcentrifuge tubes and centrifuged at a relative centrifugal force (RCF) of 14000 g for 10 minutes.

*HPLC Analysis conditions*

| | |
|---|---|
| **Column:** | Hypersil C18, 3μ, 100 x 4.60mm |
| **Flow rate:** | 1.8 ml/min |
| **Oven temperature:** | 30°C |
| **Solvents:** | A: 2% acetic acid in acetonitrile |
| | B: 2% acetic acid in water |
| **Injection volume:** | 10 μl |
| **Gradient:** | Isocratic at 20% A and 80% B. |

**Quantification:** The catechins are eluted at the beginning of the chromatogram in a broad unresolved peak and the theaflavins are eluted between 5-15 min. Detection is at 274 nm. Peak area is measured relative to a calibration curve constructed daily. The calibration curve is constructed from a series of solutions containing known amounts of a tea extract previously analysed against pure theaflavin standards.

Determination of Theaflavins in Leaf Tea

Reversed-phase high performance liquid chromatography is used to quantify the amount of theaflavins in a solid sample as follows:

*Sample Preparation*

1. Grind the tea leaf to a fine powder using a pestle and mortar or hammer mill.
2. Place 70% (w/v) aqueous methanol in a 70°C water bath and allow enough time to reach temperature.
3. Weigh accurately 1 part by weight of sample into extraction tube.
4. Add 25 parts by weight of the hot aqueous methanol to the tube, gently mix on a vortex mixer and then place the tube in the water bath at 70°C for 10 minutes.
5. Remove tube from water bath and allow too cool for a few minutes.
6. Centrifuge tube at 2,500 rpm for 10 minutes using a Galaxy 16HD micro centrifuge.
7. Carefully decant supernatant into a clean graduated test tube.
8. Repeat steps 4 to 6 to re-extract the residue in the extraction tube. Combine the two supernatants and make up to 50 parts by weight by adding cold 70% aqueous methanol.
9. Add 5 parts by weight of a stabilising solution of 25 mg/ml EDTA and 25 mg/ml ascorbic acid in distilled water.
10. Decant into eppendorf tubes and centrifuge in the micro centrifuge at 14,500 rpm for 10 minutes and decant supernatant into HPLC vials.

*HPLC Analysis conditions*

The HPLC analysis conditions are identical to those given above for juice and beverages.

Determination of Total Polyphenols

The total polyphenol content of a sample is determined using the Folin-Ciocalteu method as detailed in the International Standard published by the International Organization for Standardization as ISO 14502-1:2005(E).

Leaf Size and Grade

For the purposes of the present invention, leaf particle size is characterised by sieve mesh size using the following convention:

- Tyler mesh sizes are used throughout.
- A "+" before the sieve mesh indicates the particles are retained by the sieve.
- A "-" before the sieve mesh indicates the particles pass through the sieve.

For example, if the particle size is described as -5 +20 mesh, then the particles will pass through a 5 mesh sieve (particles smaller than 4.0 mm) and be retained by a 20 mesh sieve (particles larger than 841 $\mu$m).

Leaf particle size may additionally or alternatively be characterized using the grades listed in the international standard ISO 6078-1982. These grades are discussed in detail in our European patent specification EP 1 365 657 B1 (especially paragraph [0041] and Table 2) which is hereby incorporated by reference.

**SUMMARY OF THE INVENTION**

We have surprisingly found that fermented tea juice has a composition different to that of conventional black tea extracts and can be combined with unfermented tea to provide novel tea products. Without wishing to be bound by theory, we believe that fermented tea juice has a relatively low level of gallated theaflavins and/or caffeine and can thus be combined with green tea to increase the soluble tea solids thereof without excessively increasing negative properties, such as bitterness, associated with gallated polyphenols and/or caffeine. Furthermore the tea juice is found to be relatively rich in theanine which is known to have certain desirable physiological effects such as increasing relaxation, alertness and/or concentration.

Thus in a first aspect, the present invention provides a process comprising the step of:

a) expressing juice from a first supply of fresh tea leaves thereby to produce leaf residue and tea juice;
b) subjecting the first supply of fresh tea leaves and/or the tea juice to a fermentation step thereby to at least partially ferment the tea juice; and
c) combining the at least partially fermented tea juice with substantially unfermented tea material.

In a second aspect, the present invention provides a tea product obtained and/or obtainable by the process. Such a product will comprise theaflavins but will have a higher level of catechins in the polyphenols than black tea products and will have a relatively low proportion of gallated theaflavins and thus may be more stable and/or less bitter than tea products produced by alternative processes.

Thus in a further aspect the present invention provides a composition comprising polyphenols wherein the polyphenols comprise catechins and theaflavins, wherein the weight ratio of the catechins to total polyphenols is greater than 0.40 and wherein the weight ratio of theaflavin to theaflavin digallate (TFl/TF4) is at least 2.0:1.

## DETAILED DESCRIPTION

### Expression of Juice

The tea juice for use in the present invention is expressed from a first supply of fresh tea leaves. The expression step also produces leaf residue which is separated from the tea juice, e.g. by filtering and/or centrifugation.

If the amount of juice expressed is too low then it becomes difficult to separate the juice from the leaf residue and/or leads to an inefficient process. Thus it is preferred that the amount of expressed juice is at least 10 ml per kg of the fresh tea leaves, more preferably at least 25 ml, more preferably still at least 50 ml and most preferably from 75 to 600 ml. When referring to the volume of juice expressed per unit mass of tea leaves it should be noted that the mass of the tea leaves is expressed on an "as is" basis and not a dry weight basis. Thus the mass includes any moisture in the leaves.

The expression step can be achieved in any convenient way so long as it allows for separation of the tea juice from the leaf residue and results in the required quantity of juice. The machinery used to express the juice may, for example, include a hydraulic press, a pneumatic press, a screw press, a belt press, an extruder or a combination thereof.

The juice may be obtained from the fresh leaves in a single pressing or in multiple pressings of the fresh leaves. Preferably the juice is obtained from a single pressing as this allows for a simple and rapid process.

In order to minimise degradation of the valuable tea compounds, it is preferred that the expression step is performed at ambient temperature. For example, the leaf temperature may be from 5 to 40°C, more preferably 10 to 30°C.

The time and pressure used in the expression step can be varied to yield the required amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

Prior to expression, the fresh tea leaves may undergo a pretreatment including, for example, a unit process selected from maceration, withering or a combination thereof.

The tea juice for use in the present invention is found to be unexpectedly low in gallated polyphenols. This is apparent from the weight ratio of theaflavin (TF1) to theaflavin digallate (TF4). Preferably TF1/TF4 in the black tea juice is at least 2.0, more preferably at least 3.0, more preferably still at least 3.2 and most preferably from 3.5 to 5.0. Additionally or alternatively the amount of TF1 in the total theaflavins in the juice is preferably at least 40% by weight, more preferably at least 42% by weight and most preferably from 45 to 60% by total weight of the theaflavins.

Maceration prior to expression may help in decreasing the time and/or pressure required to express the desired quantity of juice. Surprisingly, however, we have found that excessive damage to the fresh tea leaves prior to expression can result in a lowering of the weight ratio of non-gallated to gallated polyphenols in the expressed juice. Therefore in a preferred embodiment the fresh leaves are not subjected to a maceration and/or freeze-thaw process prior to or during the expression step.

### Fermentation

Step (b) of the process comprises subjecting the first supply of fresh tea leaves and/or the tea juice to a fermentation step thereby to at least partially ferment the tea juice.

In one embodiment the tea juice is fermented after expression, for example by contacting the juice with an oxidizing agent. The endogenous tea enzymes include both oxidases and peroxidases and so the oxidizing agent is preferably oxygen, peroxide or a combination thereof. The oxidizing agent may suitably be oxygen gas or an oxygen-containing gas such as air. Additionally or alternatively the oxidizing agent may be a peroxide such as hydrogen peroxide. This embodiment is particularly preferred if the leaf residue is to be further processed after expression to yield a substantially unfermented tea product, i.e. if the leaf residue is to be processed to make a green tea product.

In a preferred embodiment the fresh tea leaves are subjected to the fermentation step and the juice is expressed from the fermented dhool. This embodiment is particularly preferred if the leaf residue is to be further processed after expression to yield a fermented tea product, i.e. if the leaf residue is to be processed to make an oolong or black tea product. A pre-requisite for fermentation of tea leaves is maceration to produce dhool. Therefore it is preferred that step (b) comprises macerating the fresh tea leaves thereby to produce dhool.

Maceration involves wounding the leaves e.g. by rolling and/or crushing the leaves i.e. to break down the plant tissue structure. In black tea manufacture this has the effect of liberating fermentable substrates and fermenting enzymes from within the plant cells and tissue. The maceration is preferably achieved by passing the fresh tea leaves through a cutting machine. Thus for the purpose of the invention the fresh tea leaves may be macerated by a maceration process using, for example, a CTC machine, rotorvane, ball mill, grinder, hammer mill, Lawri tea processor, Legg cutting machine, or tea rollers as in orthodox tea processing. Combinations of these maceration processes may also be used.

The degree of fermentation is conveniently judged by the proportion of oxidised catechins. In particular, one can measure a quantity, C0, which is the amount of catechins in the fresh tea leaves prior to maceration in percent by dry weight of the fresh leaves. One can then measure a second quantity, $C_F$, which is the amount of catechins in the dhool after a given fermentation time, $t_F$, in percent by dry weight of the dhool. One can then use these values to calculate the degree of fermentation, R, as the content of catechins in the dhool at $t_F$ as a percentage of the content of catechins in the fresh tea leaves prior to maceration on a dry weight basis. In other words, the degree of fermentation can be calculated as follows:

$$R(\%) = 100 C_F/C_0,$$

such that for negligible fermentation R = 100% and for complete fermentation R = 0%.

We have found that fermentation for a time ($t_F$) sufficient to reduce the content of catechins in the dhool to less than 50% of the content of catechins in the fresh tea leaves prior to maceration on a dry weight basis (i.e. $R$ < 50%) results in significant and surprising changes in the composition of the juice expressed from the dhool. In particular, the greater the degree of fermentation (lower R), the lower the proportion of gallated theaflavins and/or caffeine is found in the expressed juice. Preferably, $t_F$ is sufficient to reduce the amount of catechins in the dhool to less than 40% (i.e. R < 40%), more preferably less than 30%, and most preferably from 25 to 0% of the content of catechins in the fresh tea leaves prior to maceration on a dry weight basis.

The exact time required to produce the desired degree of fermentation will depend, amongst other things, on the temperature of the dhool, the degree of maceration of the dhool and the supply of oxygen to the dhool. Typically, however, $t_F$ is at least 1 hour, more preferably at least 1.5 hours, more preferably still at least 1.75 hours and most preferably from 2 to 24 hours.

The preferred fermentation temperature is from 10 to 40°C, more preferably from 15 to 25°C. Too low a temperature results in a slow rate of fermentation whilst too high a temperature may result in deactivation of oxidative enzymes and/or generation of unwanted reaction products.

Preferably the fermentation is sufficient to provide black tea juice. In particular it is preferred that the fermentation is sufficient to oxidise most of the catechins in the fresh leaves. Thus, it is preferred that the at least partially fermented tea juice comprises polyphenols and the polyphenols comprise catechins wherein the weight ratio of catechins to total polyphenols is less than 0.40:1, more preferably less than 0.30:1, more preferably still less than 0.20:1 and most preferably from 0.15:1 to 0.000:1.

Combining the Tea Juice with Unfermented Tea Material

Step (c) of the process of the invention comprises combining the at least partially fermented tea juice with substantially unfermented tea material.

The substantially unfermented tea material preferably comprises green leaf tea and/or tea solids extracted from green leaf tea. Preferably the substantially unfermented material is green leaf tea. The manufacturing processes for producing green leaf tea from fresh tea leaves are well-known and suitable processes are described, for example, in Chapter 13 of "Tea - Cultivation to consumption" (K.C. Willson and M.N. Clifford (Eds), 1992, Chapman & Hall, London) which is hereby incorporated by reference in its entirety. A step common to manufacture of all green teas is an enzyme deactivation step. Any known treatment capable of enzyme denaturation may be used to deactivate the fermentation enzymes in the substantially unfermented tea material to prevent fermentation thereof. A particularly convenient enzyme deactivation treatment is a heat treatment. For example, the fresh leaves used to manufacture the substantially unfermented tea material may have been steamed and/or pan-fried.

Preferably the substantially unfermented tea material comprises polyphenols and the polyphenols comprise catechins wherein the weight ratio of catechins to total polyphenols is at least 0.50:1, more preferably at least 0.60:1 and most preferably from 0.70 to 0.99:1.

In one embodiment, the process of the invention is used to manufacture a leaf tea product with increased amounts of water-soluble tea solids, thus allowing for increased speed of infusion of the leaf tea product. A convenient way of manufacturing such a product is by combining the tea juice with the leaf tea to form a mixture and then drying the mixture. The mixture is preferably dried to a water content of less than 30% by weight of the mixture, more preferably to a water content in the range of 1 to 10% by weight. Conveniently the tea juice may be sprayed onto the leaf tea to form the mixture. Additionally or alternatively the mixture may be dried in a fluid bed drier.

In another embodiment, the process of the invention is used to manufacture a ready-to-drink beverage, a tea powder or a tea concentrate having improved properties, such as lower bitterness, by combining the juice with tea solids extracted from a substantially unfermented leaf tea. For example, the juice or a fraction thereof may be combined with a powder or liquid concentrate comprising the tea solids extracted from the leaf tea. Additionally or alternatively the tea juice may be combined with a tea beverage comprising the tea solids extracted from the leaf tea.

The tea juice may be combined with the substantially unfermented tea material in any amount. We have found however, that particularly desirable tea products can be prepared when the tea juice is combined with the substantially unfermented tea material such that the resulting tea product comprises soluble tea solids derived from both the juice and tea material in roughly equal amounts. Thus it is preferred that the combination results in a tea product wherein the weight ratio of water-soluble tea solids derived from the tea juice to water-soluble tea solids derived from the substantially unfermented tea material is in the range 5:1 to 1:5, more preferably 2:1 to 1:2 and most preferably 1.5:1 to 1:1.5.

The tea juice may be combined with the tea material without any processing of the juice following expression. Alternatively, for example, the juice may be subjected to a concentration and/or dilution step prior to the combination step.

The substantially unfermented tea material in step (c) may comprise the leaf residue from step (a). However, in order to maximise the tea solids in the final product, it is preferred that the substantially unfermented tea material is derived from a second supply of fresh tea leaves.

Processing the Leaf Residue

In order to maximise the efficiency of the process it is preferred that the leaf residue is not discarded but is further processed to produce a commercially viable product. In a particularly preferred embodiment, the process comprises an additional step (d) wherein the leaf residue is processed to produce leaf tea.

We have surprisingly found that if the amount of juice expressed is below 300 ml per kg of fresh leaves, the leaf residue can be processed to make leaf tea of at least conventional quality despite the fact that the leaf residue after expression has a lower overall level of tea compounds such as polyphenols and amino acids. In general, the quality of the final leaf tea (e.g. in terms of infusion performance) is better the less juice expressed. Thus it is preferred that the amount of juice expressed in step (a) is less than 300 ml per kg of tea leaves, more preferably less than 275 ml, more preferably still less than 250 ml and most preferably less than 225 ml.

The leaf residue may be processed to produce green leaf tea, black leaf tea or oolong leaf tea. In the case of oolong leaf tea and black leaf tea step (d) comprises fermenting the leaf residue.

The manufacturing processes of green leaf tea, black leaf tea and oolong leaf tea are well known and suitable processes are described, for example, in "Tea: Cultivation to Consumption", K.C. Willson and M.N. Clifford (Eds), 1st Edn, 1992, Chapman & Hall (London), Chapters 13 and 14.

A step common to manufacture of all leaf teas is a drying step. In the case of oolong and black leaf tea, the drying step usually also serves to deactivate the fermentation enzymes. Efficient drying requires high temperatures and so it is preferred that step (d) of the process comprises drying the leaf residue at a temperature of at least 75°C, more preferably at least 90°C.

It is preferred that step (d) comprises sorting the leaf tea manufactured from the leaf residue, preferably after drying, to achieve a particle size of at least 35 mesh. More preferably the leaf tea is sorted to achieve a particle size of from 30 mesh to 3 mesh. Alternatively or additionally, the leaf tea may be sorted to achieve a leaf tea grade of Pekoe Fannings (PF) grade or larger, more preferably Orange Fannings (OF) or larger and most preferably Broken Orange Pekoe Fannings (BOPF) or larger.

The Tea Product

The present invention provides a tea product obtained and/or obtainable by the process. Such products will have a low level of gallated theaflavins and/or a low level of caffeine and thus may be more stable and/or less bitter than tea products produced by alternative processes. Additionally or alternatively the products may have a higher level of theanine than tea products produced by alternative processes.

The tea product may, for example, be a leaf tea, a beverage, a tea powder or a liquid concentrate.

A beverage will typically comprise tea solids in an amount of from 0.001 to 5% by weight of the beverage, more preferably 0.01 to 3% by weight and most preferably 0.1 to 1% by weight

Owing to the combination of fermented tea solids (from the tea juice) and unfermented tea solids (from the tea material) in the product, the tea product will comprise catechin levels intermediate between those of fermented and unfermented tea products. Thus it is preferred that the product comprises polyphenols wherein the polyphenols comprise catechins and the weight ratio of the catechins to total polyphenols is greater than 0.40, more preferably from 0.50 to 0.80 and most preferably from 0.55 to 0.70.

The tea product will typically comprise a relatively low proportion of gallated theaflavins. Preferably the theaflavins comprise theaflavin (TF1) and theaflavin digallate (TF4) and the weight ratio of theaflavin to theaflavin digallate (TFl/TF4) is at least 2.0, more preferably at least 3.0 and most preferably from 3.5 to 5.0.

The tea product will typically comprise a relatively low content of caffeine and/or a high level of theanine. Conveniently this can be represented by the weight ratio of theanine to caffeine. Preferably the weight ratio of theanine to caffeine is greater than 0.3, more preferably at least 0.4, most preferably from 0.5 to 2.0.

The Composition

The present invention provides a composition which has the sensorial and healthy properties of a substantially unfermented tea product but which provides the benefits of theaflavins without unwanted bitterness from large proportions of caffeine and/or gallated theaflavins.

The composition comprises polyphenols wherein the polyphenols comprise catechins and theaflavins, wherein the weight ratio of the catechins to total polyphenols is greater than 0.40 and wherein the weight ratio of theaflavin to theaflavin digallate (TF1/TF4) is at least 2.0:1.

Preferably the composition has green tea character. Thus the weight ratio of catechins to total polyphenols is preferably from 0.50 to 0.80 and most preferably from 0.55 to 0.70.

Preferably at least some of the polyphenols are derived from black tea. Thus it is preferred that the polyphenols comprise thearubigins.

Preferably the weight ratio of theaflavin to theaflavin digallate (TFl/TF4) is at least 3.0 and most preferably from 3.5 to 5.0.

The composition will typically comprise a relatively low content of caffeine and/or a high level of theanine. Conveniently this can be represented by the weight ratio of theanine to caffeine. Preferably the weight ratio of theanine to caffeine is greater than 0.3, more preferably at least 0.4, most preferably from 0.5 to 2.0.

**EXAMPLES**

The present invention will be further described with reference to the following examples.

Example 1

This Example demonstrates the production of a black tea juice useful for the present invention.

*Preparation and Fermentation of Dhool*

Fresh Kenyan tea leaves (two leaves and a bud) of *Camellia sinensis* var. *assamica* were used. The catechin content of the unmacerated leaves was about 15% by weight. The fresh tea leaves were chopped using a vegetable cutter before being fed twice through a CTC (cut, tear, curl) machine (Rollers set at six teeth per inch with speeds of 1000 and 100 rpm respectively). The fresh dhool was then fermented for 2 hours at a temperature of 25°C using a Teacraft™ fermentation unit (0.5°C wet bulb depression, 90% R.H.).

*Pressing*

The fermented dhool was pressed to yield black tea juice. Pressing was done using a hydraulic press (5 Tonnes applied to a 500 g mass of fermented leaf inside a cylinder of diameter 160 mm, resulting in a downward pressure of 354 psi (2.44 MPa)) to express black tea juice. The tea juice was immediately centrifuged for 20 minutes (10000 g at 3°C) and the supernatant was then filter-sterilised using a Nalgene™ filtration unit fitted with a 0.2 μm filter.

*Production of Reference Infusion*

A portion of the dhool which had been fermented for 2 hours but which had not been pressed was broken up by hand and then dried using a fluidized bed drier (ten minutes at an inlet air temperature of 120°C, followed by ten minutes at an inlet air temperature of 90°C) to obtain a made black tea (black leaf tea) with moisture content of 3% by weight. An infusion of 2 g of this leaf tea was prepared by infusing 2 g of the tea in 200 ml freshly boiled water for 2 minutes.

*Results*

Table 1 shows the composition of the tea juice and the reference infusion.

TABLE 1

| Component | Juice | Ref. Infusion |
| --- | --- | --- |
| Total solids (mg/ml) | 62.67 | 2.80 |
| TF1 (mg/ml) | 0.150 | 0.019 |
| TF2 (mg/ml) | 0.074 | 0.017 |
| TF3 (mg/ml) | 0.057 | 0.013 |
| TF4 (mg/ml) | 0.040 | 0.012 |
| Catechins (mg/ml) | 0.000 | 0.169 |
| Total Polyphenols (mg/ml) | 12.33 | 0.793 |
| Theanine (mg/ml) | 2.135 | 0.0526 |
| Caffeine (mg/ml) | 1.582 | 0.274 |
| TFI/TF4 | 3.73 | 1.58 |
| %TF1 in Theaflavins | 46.7 | 30.6 |
| Catechins/Polyphenols | 0.00 | 21.4 |
| Theanine/Caffeine | 1.35 | 0.19 |

This data shows that the proportion of gallated species in the theaflavins of tea black juice is low compared with the reference infusion. Furthermore the ratio of theanine to caffeine is much higher in the juice than the infusion.

Example 2

This Example demonstrates the effect of combining black tea juice with green tea.

*Production of Samples*

Fresh Kenyan tea leaves (which had not been withered and had a catechin content of around 15% by dry weight) of *Camellia Sinensis* var. *assamica* were steamed for 60 seconds at ~100°C to inactivate endogenous enzymes and thus prevent fermentation. The steamed leaves, cooled to room temperature, were chopped using a vegetable cutter to yield chopped leaf of average size of around 0.5 to 1 cm$^2$. The fresh dhool was then split into three portions. The first portion was not combined with any juice. The second portion was combined with black tea juice (produced as described in example 1) in a weight ratio of 1.28:1 juice to dhool. The third portion was combined with the black tea juice in a weight ratio of 2.58:1 juice to dhool. Each portion was then dried in a fluid bed drier to produce leaf tea. The leaf tea from the first portion (dhool only) was labelled as sample A, leaf tea from the second portion (1.28:1 dhool:juice) was labelled as sample B and leaf tea from the third portion (2.58:1 dhool:juice) was labelled as sample C.

*Production of Infusions*

An infusion of each leaf tea was prepared by infusing 2 g of each sample in 200 ml freshly boiled water for 2 minutes.

*Results*

Table 2 shows the composition of the infusions.

TABLE 2

| Component | Sample A | Sample B | Sample C |
|---|---|---|---|
| Total solids (mg/ml) | 3.214 | 3.492 | 4.436 |
| TF1 (mg/ml) | 0.000 | 0.001 | 0.002 |
| TF2 (mg/ml) | 0.000 | 0.000 | 0.000 |
| TF3 (mg/ml) | 0.000 | 0.000 | 0.000 |
| TF4 (mg/ml) | 0.000 | 0.000 | 0.000 |
| Catechins (mg/ml) | 0.900 | 0.769 | 0.841 |
| Total Polyphenols (mg/ml) | 1.316 | 1.192 | 1.422 |
| Theanine (mg/ml) | 0.048 | 0.085 | 0.096 |
| Caffeine (mg/ml) | 0.249 | 0.229 | 0.259 |
| TF1/TF4 | -- | > 2 | > 4 |
| Catechins/Polyphenols | 0.68 | 0.65 | 0.59 |
| Theanine/Caffeine | 0.19 | 0.37 | 0.37 |

These results show that tea products made by combining black juice with green tea (samples B and C) produce infusions with higher levels of solids, theaflavins and theanine than those produced from the green leaf tea with no juice added (sample A). Furthermore, these results show that the theaflavins in the infusions made from the samples with black juice added (samples B and C) are dominated by the non-gallated theaflavin (TF1). Furthermore, addition of the black juice either reduces the caffeine content of the infusion (sample B) or has a very small effect thereon (sample C). Thus black tea juice can be used to increase the theaflavin and theanine content of green leaf tea infusions without bringing excessive levels of gallated theaflavins and/or caffeine (which are both associated with bitterness).

**Claims**

1. A process comprising the steps of:

   a) expressing juice from a first supply of fresh tea leaves thereby to produce leaf residue and tea juice;
   b) subjecting the first supply of fresh tea leaves and/or the tea juice to a fermentation step thereby to at least partially ferment the tea juice; and
   c) combining the at least partially fermented tea juice with substantially unfermented tea material.

2. A process according to claim 1 wherein the substantially unfermented tea material comprises green leaf tea and/or tea solids extracted from green leaf tea.

3. A process according to claim 1 or claim 2 wherein the substantially unfermented tea material is derived from a second supply of fresh tea leaves.

4. A process according to any one of the preceding claims wherein the tea juice is black tea juice.

5. A process according to any one of the preceding claims wherein the process comprises the additional step of:

d) processing the leaf residue to produce leaf tea.

6. A tea product obtainable by the process of any one of the preceding claims.

7. A tea product according to claim 6 comprising polyphenols wherein the polyphenols comprise catechins and the weight ratio of the catechins to total polyphenols is greater than 0.40, preferably from 0.50 to 0.70.

8. A tea product according to claim 6 or 7 comprising theaflavins wherein the theaflavins comprise theaflavin (TF1) and theaflavin digallate (TF4) and wherein the weight ratio of theaflavin to theaflavin digallate (TF1/TF4) is at least 2.0, preferably at least 3.0.

9. A tea product according to any one of claims 6 to 8 and comprising theanine and caffeine wherein the weight ratio of theanine to caffeine is greater than 0.3:1, preferably at least 0.5:1.

10. A composition comprising polyphenols wherein the polyphenols comprise catechins and theaflavins, wherein the weight ratio of the catechins to total polyphenols is greater than 0.40 and wherein the weight ratio of theaflavin to theaflavin digallate (TF1/TF4) is at least 2.0:1, preferably at least 3.0:1.

11. A composition according to claim 10 wherein the weight ratio of catechins to total polyphenols is from 0.50 to 0.70.

12. A composition according to claim 10 or claim 11 wherein the polyphenols comprise thearubigins.

13. A composition according to any one of claims 10 to 12 comprising theanine and caffeine in a weight ratio of at least 0.3:1.


**Patentansprüche**

1. Verfahren, umfassend die Schritte:

   a) Auspressen von Saft aus einer ersten Zuführung von frischen Teeblättern, wodurch Teerückstand und Teesaft produziert werden;
   b) Unterwerfen der ersten Zuführung von frischen Teeblättern und/oder des Teesafts einem Fermentierungsschritt, um dadurch den Teesaft wenigstens teilweise zu fermentieren, und
   c) Kombinieren des wenigstens teilweise fermentierten Teesaftes mit im Wesentlichen unfermentiertem Teematerial.

2. Verfahren gemäß Anspruch 1, wobei das im Wesentlichen unfermentierte Teematerial grünen Blatttee und/oder Teefeststoffe, die aus grünem Blatttee extrahiert wurden, umfasst.

3. Verfahren gemäß Anspruch 1 oder Anspruch 2, wobei das im Wesentlichen unfermentierte Teematerial aus einer zweiten Zuführung von frischen Teeblättern stammt.

4. Verfahren gemäß einem der vorangehenden Ansprüche, wobei der Teesaft schwarzer Teesaft ist.

5. Verfahren gemäß einem der vorangehenden Ansprüche, wobei das Verfahren den zusätzlichen Schritt:

   d) Verarbeiten des Blattrückstandes, um Blatttee herzustellen,

   umfasst.

6. Teeprodukt, das durch das Verfahren gemäß einem der vorangehenden Ansprüche erhältlich ist.

7. Teeprodukt gemäß Anspruch 6, das Polyphenole umfasst, wobei die Polyphenole Catechine umfassen und das Gewichtsverhältnis der Catechine zu Gesamtphenolen größer als 0,40, vorzugsweise von 0,50 bis 0,70, ist.

8. Teeprodukt gemäß Anspruch 6 oder 7, das Theaflavine umfasst, wobei die Theaflavine Theaflavin (TF1) und Theaflavindigallat (TF4) umfassen und wobei das Gewichtsverhältnis von Theaflavin zu Theaflavindigallat (TF1/TF4) wenigstens 2,0, vorzugsweise wenigstens 3,0, ist.

9. Teeprodukt gemäß einem der Ansprüche 6 bis 8, das Theanin und Coffein umfasst, wobei das Gewichtsverhältnis von Theanin zu Coffein größer als 0,3:1, vorzugsweise wenigstens 0,5: 1, ist.

10. Zusammensetzung, die Polyphenole umfasst, wobei die Polyphenole Catechine und Theaflavine umfassen, wobei das Gewichtsverhältnis der Catechine zu Gesamtpolyphenolen größer als 0,40 ist und wobei das Gewichtsverhältnis von Theaflavin zu Theaflavindigallat (TF1/TF4) wenigstens 2,0:1, vorzugsweise wenigstens 3,0:1, ist.

11. Zusammensetzung gemäß Anspruch 10, wobei das Gewichtsverhältnis von Catechinen zu Gesamtpolyphenolen 0,50 bis 0,70 ist.

12. Zusammensetzung gemäß Anspruch 10 oder Anspruch 11, wobei die Polyphenole Thearubigine umfassen.

13. Zusammensetzung gemäß einem der Ansprüche 10 bis 12, die Theanin und Coffein in einem Gewichtsverhältnis von wenigstens 0,3:1 umfasst.

## Revendications

1. Processus comprenant les étapes consistant à :

   a) extraire le jus d'un premier apport de feuilles de thé fraîches afin de produire des résidus de feuilles et du jus de thé,
   b) soumettre le premier apport de feuilles de thé fraîches et/ou le jus de thé à une étape de fermentation afin de faire fermenter au moins partiellement le jus de thé ; et
   c) combiner le jus de thé au moins partiellement fermenté avec un produit de thé sensiblement non fermenté.

2. Processus selon la revendication 1 dans lequel le produit de thé sensiblement non fermenté comprend du thé vert en feuilles et/ou des solides de thé extraits de thé vert en feuilles.

3. Processus selon la revendication 1 ou la revendication 2 dans lequel le produit de thé sensiblement non fermenté provient d'un second apport de feuilles de thé vert.

4. Processus selon l'une quelconque des revendications précédentes dans lequel le jus de thé est du jus de thé noir.

5. Processus selon l'une quelconque des revendications précédentes dans lequel le processus comprend l'étape supplémentaire consistant à :

   d) transformer les résidus de feuilles pour produire du thé en feuilles.

6. Produit de thé pouvant être obtenu par le processus selon l'une quelconque des revendications précédentes.

7. Produit de thé selon la revendication 6 comprenant des polyphénols, dans lequel les polyphénols comprennent des catéchines et le rapport pondéral des catéchines sur le total des polyphénols est supérieur à 0,40, de préférence compris entre 0,50 et 0,70.

8. Produit de thé selon la revendication 6 ou 7 comprenant des théaflavines, dans lequel les théaflavines comprennent de la théaflavine (TF1) et du digallate de théaflavine (TF4) et dans lequel le rapport pondéral de la théaflavine sur le digallate de théaflavine (TF1/TF4) est au moins de 2,0, de préférence d'au moins 3,0.

9. Produit de thé selon l'une quelconque des revendications 6 à 8 et comprenant de la théanine et de la caféine, dans lequel le rapport pondéral de la théanine sur la caféine est supérieur à 0,3:1, de préférence d'au moins 0,5:1.

10. Composition comprenant des polyphénols dans laquelle les polyphénols comprennent des catéchines et des théaflavines, dans lequel le rapport pondéral des catéchines sur le total des polyphénols est supérieur à 0,40 et dans lequel le rapport pondéral de la théaflavine sur le digallate de théaflavine (TF1/TF4) est d'au moins 2,0:1, de préférence d'au moins 3,0:1.

**11.** Composition selon la revendication 10 dans laquelle le rapport pondéral des catéchines sur le total des polyphénols est compris entre 0,50 et 0,70.

**12.** Composition selon la revendication 10 ou la revendication 11 dans laquelle les polyphénols comprennent des théarubigines.

**13.** Composition selon l'une quelconque des revendications 10 à 12 comprenant de la théanine et de la caféine selon un rapport pondéral d'au moins 0,3:1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008065007 A
- WO 9823164 A
- EP 1365657 B1

**Non-patent literature cited in the description**

- Tea - Cultivation to consumption. Chapman & Hall, 1992, 555-601
- Tea - Cultivation to consumption. Chapman & Hall, 1992
- Tea: Cultivation to Consumption. Chapman & Hall, 1992